# EUROPEAN PATENT APPLICATION

(11) **EP 4 684 947 A2**
(43) Date of publication of application: **28.01.2026**
(21) Application number: 25188574.5
(22) Date of filing: 09.07.2025
(51) Int. Cl.: B29C 70/50, C08J 5/24, C08L 63/00

(54) **TAPE STRUCTURE OF A TAPE FOR USE IN MANUFACTURING A COMPOSITE STRUCTURE, AUTOMATED FIBRE PLACEMENT (AFP) DEVICE, AUTOMATED FIBRE PLACEMENT (AFP) METHOD AND COMPOSITE STRUCTURE**

(30) Priority: 25.07.2024 DE 102024121151
(71) Applicant: Airbus (S.A.S.), 31700 Blagnac (FR)
(72) Inventor: HÜBNER, Fabian, 31700 Blagnac Cedex (FR); BEIER, Uwe, 31700 Blagnac Cedex (FR)
(74) Representative: Isarpatent

(57) **Abstract**

The present invention provides a tape structure of a tape (100) for use in manufacturing a composite structure (102), the tape structure comprising a layer of unidirectional pre-impregnated dry fibres (105) embedded in a polymer matrix (104), with the polymer matrix (104) having a composition comprising 20% and 50%, preferably between 25% and 40% by weight of the polymer matrix (104) of at least one first monomer or oligomer, between 30% and 60%, preferably between 35% and 40 % by weight of the polymer matrix (104) of at least one second monomer or oligomer, between 4% and 25%, preferably between 4% and 7 % by weight of the polymer matrix (104) of at least one curing agent, between 0.5% and 5 %, preferably between 0.8% and 1.5% by weight of the polymer matrix (104) of at least one reactive chain extender, and at least one additive, preferably configured as a toughening agent, wherein the polymer matrix (104) is configured to be solid or semi-solid in a first temperature range and softened in a second temperature range different from the first temperature range, an automated fibre placement device, an automated fibre placement (AFP) method and a composite structure (102) manufactured in the method.

## Description

The present invention pertains to a tape structure for a tape for use in manufacturing a composite structure, an automated fibre placement (AFP) device, automated fibre placement (AFP) method and a composite structure.

Although it can be used in many applications, the present invention and the problems underlying it are explained in greater detail in relation to aircrafts. However, the devices and method described can likewise be used in vehicles in all sectors of the transport industry, e. g. for space launch vehicles, road vehicles, for rail vehicles or for watercraft.

Hydrogen propelled aircraft are a key technology for reduced in-flight emission aviation that requires technological adaptations in the systems employed in such aircraft. One of these systems is the energy storage system or tank. State of the art liquid H2 (LH2) storage systems are metal, e.g. aluminium based. Light weight structures, in particular carbon fibre reinforced plastics (CFRP) tanks are favoured over metal, e.g. aluminium tanks for enhanced performance and tank weight to storage ratio in cryogenic environments required to store liquid hydrogen (LH2), since hydrogen must be stored liquid at -253°C to achieve viable volumetric energy densities in particular in an aircraft. CFRP can strongly reduce the weight of LH2 tank systems but have to ensure H2 tightness. To ensure H2 tightness in combination with the potentially thinnest laminates with respect to mechanical performance, techniques such as fibre patch processes (FPP) and automated fibre placement (AFP) processes for e.g. cylindric portions and curved tank domes need to be improved. Approaches to manufacture large scale composite structures such as liquid hydrogen composite tank systems, but not limited thereto, use winding of the composite material to form the whole structure. Such structures can also be manufactured in automated fibre placement (AFP) methods. Therein tapes, also referred to as slit-tapes, are used to build up laminate structures comprising several layers of pre-impregnated fibre containing matrices. The tapes with a predetermined width can be derived from a broader prepreg sheet. The slitting is used to ensure edge and width quality and prevent gaps or overlays in the tapes parallelly draped during processing.

Automated fibre placement is often used to manufacture light weight structures, in particular carbon fibre reinforced plastics (CFRP) tanks that are favoured over aluminium tanks for enhances performance in cryogenic environments required to store liquid hydrogen (LH2). Materials used in such tank structures have lower layer thickness preferably of less than 100 µm, instead of 125 to 250 µm of standard aerospace prepreg materials. Since hydrogen must be stored liquid at -253°C to achieve viable volumetric energy densities in particular in an aircraft, tanks having more different layers to reach a plurality of different orientations in the fibres of the particular layer preferred to prevent the structures from microcracking in cryogenic environments.

Thinner layers or plies are very sensible in processing as contact to edges of the tapes harms the edge quality and as such the overall tape width. Laminate homogeneity without ondulations or gaps is crucial to reach highest composite performance, especially in the aforementioned cryogenic environments associated to storage of LH2.

Against this background, it is an object of the present invention to find a tape configuration and manufacturing method that enables high quality when handling processing-sensitive materials such as carbon fibre reinforced plastics (CFRP) and to ensure high quality in laminates and structures manufactured from these materials.

This object is achieved by a tape structure for use in use in manufacturing a composite structure having the features of claim 1, a fibre placement device having the features of claim 11, an automated fibre placement method according to claim 12 and a composite structure according to claim 15.

According to a first aspect of the invention, a tape structure of a tape for use in manufacturing a composite structure is provided with the tape structure comprising unidirectional fibres embedded in a thermosetting polymer matrix. The polymer matrix therein has a composition comprising between 20% and 50%, preferably between 25% and 40% by weight of the polymer matrix of at least one first monomer or oligomer, between 30% and 60%, preferably between 35% and 40 % by weight of the polymer matrix of at least one second monomer or oligomer, between 4% and 25%, preferably between 4% and 7 % by weight of the polymer matrix of at least one curing agent, between 0.5% and 5 %, preferably between 0.8% and 1.5% by weight of the polymer matrix of at least one reactive chain extender, and at least one additive, preferably configured as a toughening agent, wherein the polymer matrix is configured to be solid or semi-solid in a first temperature range and configured to soften in a second temperature range different from the first temperature range. The tape structure hence comprises a polymer matrix consisting of uncured thermosetting monomers or oligomers being a mixture of resins and curing agents, optional additives and a plurality of fibres, preferably carbon fibres embedded therein. In the composition of the polymer matrix the at least one additive also referred to toughener or toughening agent has a much lower or much higher modulus than the polymer matrix and is preferably based on rubber or siloxane, preferred with a shell separating the low modulus rubber or polysiloxane locally to the matrix to ensure compatibility with matrix. The at least one reactive chain extender comprised in the composition catalyses the reaction between the matrix resin and the curing agent in terms of time and curing temperature. Therein the chain extender is in particular configured or selected to react with epoxy or other groups of the monomer or oligomer and to extend a monomer or oligomer chain preferably without crosslinking or buildup of three-dimensional networks. The composition of the polymer matrix in the invention tape structure in particular allows for diffusion of the thermally softenable monomers or oligomers which are soluble in the mixture, yet phase separating and chemically compatible. Solid core and spontaneous meltable liquifying shell can be formed by the composition that are compactable to achieve the composite structure. The monomers or oligomers are selected based on their miscibility and chemical structure i. e. lamellar, co-continuous or spherical structure. The additives provide specific properties, such as the toughener or toughening agent providing a softening shell such as core-shell-particles that form co-continuous, spherical or other phase separation. Additives can be configured as low or non-active catalyst to prevent thermal stress or as molecules to avoid cross linking over chain extending effect. The tape structure has the advantage that a modified polymer matrix for slit-tape bands using softenable polymer-forming monomers or oligomers in the thermosetting polymer leads to a stabilization of the tape during processing, such as in slitting larger pre-structures to form slit-tapes or in placement of tapes in or on a composite structure or mould, but does not affect or reduce tackiness of the tape during or after placement. This allows for automated processing of tapes with significantly reduced layer thickness. The composition of the polymer matrix of the tape structure being semi-solid or solid at a first temperature range and softenable at a second temperature range stiffens the tape structure or slit-tapes and prevents the tape from curling, u-shaping, and flipping during processing, in particular when the tape is processed and handled over various spools in an automated fibre placement (AFP) device. The composition of the polymer matrix of the tape structure also prevents width variations occurring due to tension applied during unwinding and processing and ensures high edge quality in the tape structure. It is hence an advantage of the invention that it allows for the manufacturing of high-quality laminates and composite structures from thin-ply layers having a significantly reduced thickness of individual layers with high edge quality in particular for cryogenic environments. Therein more tape layers with alternating orientations of the fibres can be placed in the layers and at the same time weight and layer thickness be reduced. In the manufactured composite structure crack formation is prevented in particular in cryogenic environments or environments which require extended load carrying capacities that are thus susceptible to crack formation and crack propagation.

The terms "softenable", "soften", "softening" and "softened" as used herein are to be understood as modifying the polymer matrix in a way that the tape structure is altered by an increase of temperature during handling above a defined temperature range, which is a temperature below the curing temperature of the thermosetting polymer, in particular above room temperature and exhibits tackiness or increased tackiness. In some embodiments of the structure and composition of the polymer matrix of the tapes structure according to the invention, increased tackiness during handling and/or placement of tapes can be limited to the tape surface.

The term "room temperature" as used herein refers to a temperature range of between 15°C to 28°C, in particular of between 18°C to 24°C, preferably between 18°C to 21°C.

The terms "tackiness" or "tacky" as used herein refer to the adhesive property of the resin or matrix material used in the tape structure of the invention. "Tackiness" or "tacky" defines the degree to which the resin or matrix material of the tape structure exhibits properties relevant for bonding and placement of fibres i. a. during Automated Fiber Placement (AFP) process such as adhesive or cohesive properties as well as interdiffusion or entanglement on a molecular level.

A further aspect of the invention lies in a fibre placement device, having a moveable laying head for fibre deposition in an automated fibre placement (AFP) method. The fibre placement device comprises a feeding device for feeding the tape having a tape structure according to the invention to a region of placement, a temperature control unit configured to increase the processing temperature of the tape structure, in particular to increase the processing temperature of the tape structure above a temperature range of 15°C to 28°C, preferably above 18°C to 24°, in particular above 18°C to 21°C to soften the tape structure before or during placement, a deposition device for placing and/or compacting the tape on a composite structure or a previous laminated layer formed on the composite structure, a compaction device for establishing a permanent connection between the tape and the composite structure or a previous laminated layer formed on the composite structure with the compaction device being configured to apply at least one of pressure, heat, and electrical current to the tape structure during or after placement. In the fibre placement device, the feeding device, the temperature control unit, the deposition device and the compaction device are positioned adjacent to the laying head and configured to move together with the laying head. The device has the advantage that tapes made of thin-ply materials, that are in particular favoured for cryogenic composite tanks, can be processed. Furthermore, with the device, tape structures according to the invention can be placed with enhanced accuracy and performance during placement. Heating the tape structure, stiffened due to the composition of the polymer matrix, softens the tape structure or at least the surface of the tape structure before or during placement only, thus ensuring dimensional stability of the tape structure having the invention composition in the polymer matrix, which is stiffer during feeding but softened before or during placement. Warping and impairment of the tape edges is eliminated during feeding and/or handling the tape in particular over various paths in an automated fibre placement process and device. This significantly reduces gaps and/or overlays in laminates, which are known to cause ondulations or resin rich zones that are susceptible for microcracks in the composite structure or laminates. Furthermore, increased precision in placing multiple layers of thin-ply tapes with alternating orientations in the fibre layer is enabled.

A further aspect of the invention lies in a method of automated fibre placement (AFP) using a tape having a tape structure according to the invention for forming a composite structure, wherein the method comprises the steps of feeding a tape to an automated fibre placement device, heating the tape before or during placing on a composite structure or a previous laminated layer formed on the composite structure to a temperature above room temperature until the tape structure is softened and consequently a tacky state is reached or tape tackiness is increased, placing the tape on a composite structure or a previous laminated layer formed on the composite structure by moving a laying head over the composite structure or the previous laminated layer, compacting the tape to establish a permanent connection between the tape and the composite structure or a previous laminated layer and subsequent curing of the composite structure. This has the advantage that the tape is transferred safely and accurately to the position of placement and becomes tacky or exhibits increased tackiness right before or during placement. The invention tape structure prevents the tape from having ondulations or width differences during or after placement and can be placed with reduced gaps thus improving the overall structure of the formed composite structure. Additionally, the method enables handling of toughened and other matrix systems which usually have high tackiness or stickiness and tend to block the machine easily. This allows for specific high-quality processing of tapes without gaps and overlays during placement and ensures that the formed composite structures can withstand cryogenic temperatures. Furthermore, the method allows for a high degree of automation and eliminates lay-up errors. It is also encompassed, that the laying head is positioned stationary and the composite structure is moved with respect to the laying head.

A further aspect of the invention lies in a composite structure manufactured in the invention method, wherein the composite structure is an aircraft part, in particular a tank structure containing a liquid, preferably a liquid stored under cryogenic conditions such as liquid hydrogen (LH2). This has the advantage that laminates made from composite material for aviation due to high strength/weight ratio can be manufactured that have reduced susceptibility for microcracks in the composite structure or laminates. Since the tape structure of the invention advantageously allows for handling very thin tapes, preferably having a thickness of less than 100µm, in particular a thickness of between 40µm and 75µm more layers can be placed with alternating fibre orientations.

Advantageous embodiments and further developments are apparent from the further dependent claims and from the description with reference to the figures.

According to another aspect of the invention, the first temperature range is below 18°C to 28°C, preferably below 18°C to 24°C, in particular below 18°C to 21°C and the second temperature range is above 15°C to 28°C, preferably above 18°C to 24°C, in particular above 18°C to 21°C. This has the advantage that an at least partially temperature-dependent softening layer in a pre-impregnated tow or tape structure can be provided. Due to the composition of the polymer matrix the invention tape structure is solid yet "flexible" at room temperature with no elevated stickiness or tackiness and can be processed in a placement method with higher accuracy by increasing temperature above room temperature to achieve or increase tackiness of the matrix polymers shortly before or during placement without impairment of tape integrity and geometry during feeding. Overall structural quality of the laminate and/or composite structure produced using tapes having the invention tape structure is thus enhanced which is beneficial in manufacturing composites with high strength/weight ratio for cryogenic applications, due to a high possible number of alternatingly orientated tape layers.

According to an embodiment of the invention the polymer matrix further comprises a vitrimeric monomer or oligomer. Depending on the bonding or cleavage of the vitrimeric monomer or oligomer this has several advantages. On the one hand the monomers or oligomers forming the backbone of the polymer matrix can be modified or substituted by cleaving or bonding the vitrimeric monomer or oligomer in the molecular structure by e. g. disulphidic, iminic or acrylic bonding in the backbone, to enhance reactive properties of the polymer matrix and stabilizing the tape before and during placement. On the other hand vitrimeric monomers or oligomers can be bonded in particular by secondary covalent bonding, to the polymer-forming monomers or oligomers to provide or enhance tackiness at the second temperature range due to the properties of the respective vitrimeric monomers or oligomers to thus provide a softenable tape structure or slit tape.

According to a further embodiment of the invention, the tape structure further comprises at least one layer consisting of or comprising at least one of a plurality of thermoplastic particles, a fleece or a veil, which are preferably selected to be non-reactive or reactive at the second temperature range. This has several advantages. On the one hand, thermoplastic particles, fleece or a veil can be selected that are non-reactive at the second temperature range and thus stabilize the tape structure or allow for a modification and control of tackiness of the tape structure or surface but do not exhibit increased tackiness at the second temperature range. On the other hand thermoplastic particles, fleece or veil can be selected that enhance or achieve tackiness of the tape structure at the second temperature range due to the inherent properties and molecular structure of the thermoplastic particles, fleece or veil. This further contributes to the advantageous effects achieved by the invention tape structure in particular with respect to gap elimination and placement accuracy.

According to a further embodiment of the invention the tape having the tape structure of the invention has a thickness of between 50 and 300 µm, preferably less than 100µm, in particular a thickness of between 40µm and 75µm. It is an advantage of the tape that during handling until placement the composition of the matrix polymer prevents curling, u-shaping, and flipping of the thin tape as well as width variations by elimination tensile stress applied during feeding to the position of placement on a composite structure. Thus, high laminate homogeneity without ondulations or gaps, which is crucial to reach highest composite performance even when using very thin tapes, is achieved. Additionally, by enabling the use of very thin tapes, number of tape layers can be increased to further improve quality of the composite structure and strength / weight ratio without unduly increasing thickness of the structure.

According to a further embodiment of the invention the at least one first monomer or oligomer has a molecular weight of higher than 400g/mol and/or is preferably selected from the group comprising reactive diglycidyl ether-based epoxy resins, diglycidyl ether bisphenol A resins, epoxy novolac resins or combinations thereof. At least one first monomer or oligomer is preferably configured as a base monomer or oligomer with between 20% and 60%, preferably between 25% and 40% by weight of the tape structure. Due to the selected first monomer or oligomer the polymer matrix formed therewith or comprising the first monomer or oligomer is semi-solid and non-tacky at room temperature, i. e. temperature between 15°C and 28°C, but can be softened, i. e. transferred to a softened, low-viscious state with induced or increased tackiness by temperature rise above room temperature, i.e. above a temperature between 15°C to 28°C but below curing temperature. This has the advantage that the invention tape structure stiff or stiffened due to the composition of the polymer matrix can be transferred to the placement device in a semi-solid state without impairment of the tape quality during transfer and be softened shortly before or during placement to ensure high-quality and/or automated placement with reduced width variation. By means of non-limiting examples, epoxy monomers such as diglycidylether bisphenol F (DGEBF), triglycidyl-meta-aminophenol (TGMAP), tetraglycidyl methylene dianiline (TGMDA) or amines such as (poly) diglycidylether bisphenol F (DGEBF), 4,4' diaminodiphenylsulphon (4,4'DDS), diethyltoluoldiamin (DETDA), 4,4'-methylenebis(2,6-diethyleaniline) (MDEA), 4,4'-methylenebis (2-isopropyl-6-methylaniline) (MIPA) or dicyandiamide (DICY) can be used as first or base monomer or oligomer. Monomers having the above properties are commercially available e. g. as D.E.R. 337, D.E.R. 660 (Olin Epoxy), Epikote 834, Epikote 836 (Westlake Epoxy) or Araldite GY280 (Huntsman), without limiting the invention thereto. Additionally, the aforementioned monomers can be substituted by the respective vitrimeric monomers, without limiting the invention thereto.

According to a further embodiment of the invention the tape structure the at least one second monomer or oligomer has a molecular weight of at least 1000g/mol, preferably between 1200 and 1300 g/mol and/or is in particular selected from the group comprising medium molecular weight epoxy resins and low viscosity epoxy resins or combinations thereof, preferably comprising vitrimeric monomers or oligomers. Due to the selected second monomer or oligomer the polymer matrix formed having the second monomer or oligomer comprises at least one rigid softenable reactive monomer or oligomer with 30 to 60%, preferably 35 to 40% by weight of the tape structure. The advantages of the invention tape structure in terms of enhanced handling, tape integrity and increased quality in tape placement are further improved. Polymers having the above properties are commercially available e. g. as D.E.R. 661, D.E.R. 662E, D.E.R. 663E, D.E.R. 664E, EPON1002F (Westlake Epoxy) or Araldite GT7072 (Huntsman) without limiting the invention thereto.

The tape structure of the invention also has the advantage that several layers of tapes are prevented from sticking together as soon as the tape is wound onto the spool due to a shell layer formed. This is of particular advantage in tapes having a thickness of below 100µm and a toughened or other matrix system with usually high tackiness. The matrix composition also stiffens the tape structure, thus supports unwinding of the tape before or during placement and prevents the tape from curling, u-shaping and/or flipping and sticking during unwinding. During placement of tapes, the composition of the polymer matrix in the thin ply prepregs maintains slit-tape edge quality by high cohesive stiffness of the tape due to the remeltable polymer matrix of the invention tape structure before curing. The polymer matrix additionally creates a contact or interdiffusion zone, in particular exhibiting an entanglement on a molecular level, between placed tape layers and improves the composite structure and placement method. Contacting and/or interdiffusion is further enhanced, if the polymer matrix in the tape structure has an in particular layered or shell forming configuration, with the components of the polymer matrix forming a core and shell structure in the tape structure stiffening the tape to prevent impairment of edges and providing a meltable or softenable matrix or outer shell to enhance adhesion and/or cohesion between tapes during placement and before curing the composite structure.

According to a further embodiment of the invention the at least one curing agent is selected from the group comprising dicyandiamide and diaminodiphenylsulphon. This has the advantage that the properties of the tape structure with respect to curing properties, in particular curing temperature and curing time/speed can be adapted by respectively selecting the curing agent depending on the particular requirements of the process of forming the composite structure and the structure itself.

According to a further embodiment of the invention tape structure the polymer matrix is configured as a thermosetting polymer matrix curable at a temperature of between 100°C and 180°C, preferably between 110°C and 140°C. This has the advantage that the properties of the polymer matrix can be selected with respect to curing temperature and curing time/speed depending on the particular requirements of the process of forming the composite structure and of the structure itself.

Selection of additives and agents in the composition reduce internal stress by decreasing curing temperature and enabling slow crosslinking and using chain extending effects.

According to a further embodiment of the invention the tape comprises a support layer. The support layer can in particular be provided as a removable liner or foil layer attached to the tape or as an additional surface layer forming an integral part of the tape with solely this layer having the properties of the tape structure of the invention. This has the advantage, that the support layer, i.e. the liner or foil, that is peeled of right before the tape is placed and compressed on the composite structure or the previous laminated layer or the additional layer of the tape structure that remains in the tape structure supports the tape until it is placed in the final position and as such avoids sticking to compaction and placement devices as well as to roller bars.

According to a further embodiment the method further comprises moving the fibre placement head over the composite structure or a previous laminated layer in a direction forming an angle with an edge of the composite structure or a previous laminated layer. It is an advantage that the second tape layer can be placed in different angles to achieve quasi-isotropy of anisotropic fibre direction properties in the manufactured composite structure using the advantages of the placement method and tape structure. Since the invention tape structure allows for using very thin-ply tapes, the effective overall number of layers can be increased, further improving strength / weight ratio of composite structure and laminate homogeneity.

According to a further embodiment the method further comprises that the composite structure consists of at least a first and second substructure each having a first region and a second region, wherein curing the composite structure comprises independently curing the first or second region of the at least one first substructure and the at least one second substructure, contacting the first or second region of the at least one first substructure with the first or second region of the at least one second substructure and co-curing the first or second region of the at least one first substructure and the first or second region of the at least one second substructure after contacting to form the composite structure. This has the advantage that a composite material manufactured from a tape having a tape structure of the invention, can be provided with locally uncured/less cured matrixes. The first region can be cured in a first curing step whereas the second region can be finally cured in a second curing step during the joining process or after the joining process in touch with a counterpart composite material establishing a chemical or covalent bond between the regions thereby forming a highly reliable and tight joint in particular in critical regions of the manufactures composite structure likewise using the advantages of the invention tape structure during feeding and placement.

The invention will be explained in greater detail with reference to exemplary embodiments depicted in the drawings as appended.
- Fig. 1a, b, c: schematically depicts views of a tape without a structure according to an embodiment of the invention;
- Fig. 2: schematically depicts a further view of a tape structure without a structure according to an embodiment of the invention;
- Fig. 3: schematically depict an embodiment of a composite structure formed from tape structure according to an embodiment of the invention;
- Fig. 4a, b: depict an embodiment of a composite structure formed from tape structure according to another embodiment of the invention,
- Fig. 5: depicts an embodiment of a composite structure according to an embodiment of the invention; and
- Fig. 6: schematically depicts the steps of an automated fibre placement (AFP) method according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention.

Generally, this application is intended to cover any adaptations or variations of the specific embodiments discussed herein.

In the figures of the drawings, identical elements, features, and components that have the same function, and the same effect are each given the same reference signs, unless otherwise specified.

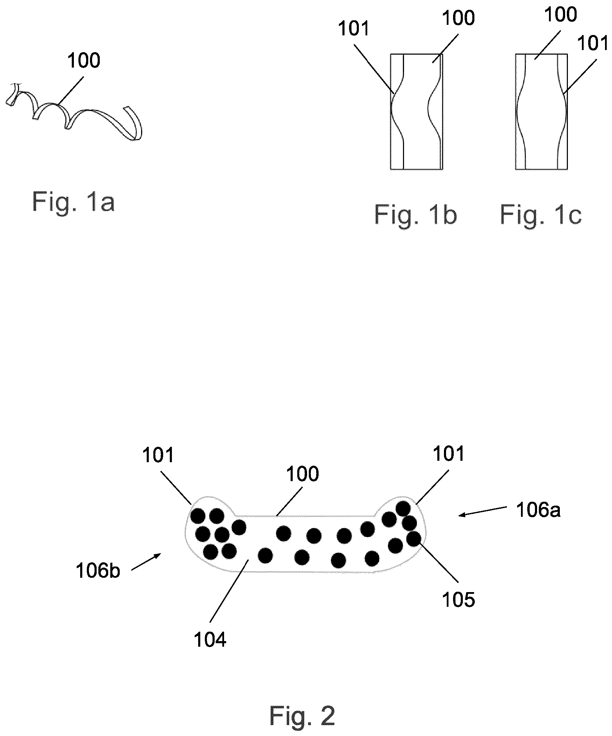

Fig. 1a, b and c depict a cut-out section of tapes 100 used in automated fibre placement methods that are not provided with a polymer matrix according to the invention. As illustrated, thin-ply or tape materials configured as thin ply slit-tapes with layer thickness of preferably less than 100µm tend to curl and flip as shown in Fig. 1a during processing, if the tape 100 is processed and handled over various spools in an automated fibre placement (AFP) device or over long distances.

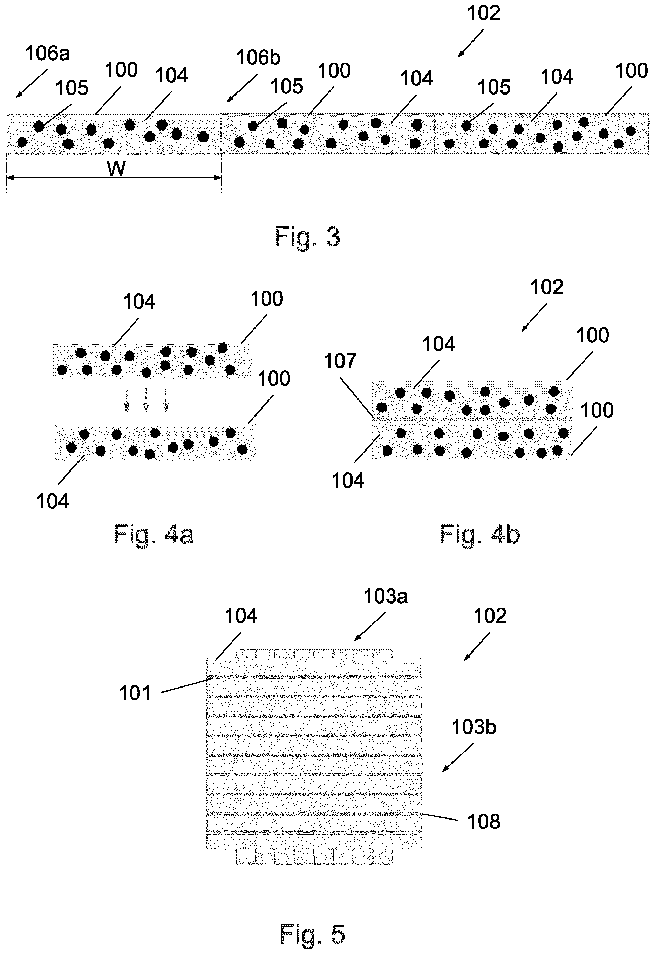

Tapes 100 with thinner plies are very sensible in processing and susceptible to impairment of ply edges 101 that significantly impacts edge 101 quality and as such the overall tape 100 quality. As shown in Figs. 1b and 1c, the edges 101 can have dimensional or width variations that can lead to ondulations or gaps when the tapes 100 are placed. This will reduce overall laminate homogeneity. Homogeneity of laminate in composite structures 102 (cf. Fig. 5) is however crucial to reach highest composite performance, especially in cryogenic environments such as storing and handling liquid hydrogen (LH2). Tapes 100 also referred to as slit-tapes used in particular in manufacturing LH2 tank structures have lower layer thickness of preferably less than 100µm instead of 125 to 250µm compared to standard prepreg materials. Use of a plurality of layers 103 (cf. Fig. 5) placed in a staggered configuration prevents microcracking in cryogenic environments and increases strength/weight ratio.

Fig. 2 depicts a further view of a tape 100 without a modified polymer matrix 104 according to an embodiment of the invention. The tape 100 is configured as a thin-ply material that is soft, sticky and shows significant edge 101 rounding or bending caused by processing damage to the tape structure. Fibres 105 are concentrated in the edge regions 106a, b. Bending or rounding leads to a reduction of initial width of the tape 100 that has to be considered in placement processes. During processing, i.e. while laying the tape 100 in an AFP method tapes 100 can be overlayed to achieve full coverage in the final composite structure 102. This however leads to local high fibre 105 volume content in the overlayed regions which is disadvantageous in particular in cryogenic applications due to accumulation of fibres 105 in critical regions leading to uneven surfaces prone to micro-cracking. If on the other hand, bandwidth is maintained using damaged tapes 100, manufactured composite structures 102 comprise gaps with lower fibre 105 content which is disadvantageous in in particular in cryogenic applications as well due to risk of microcracking and crack propagation.

Fig. 3 schematically depicts an embodiment of a composite structure 102 formed from tapes 100 having a tape structure according to an embodiment of the invention. Due to the composition of the polymer matrix 104 in the tape structure, stiffened tape 100 maintain edge 106a, b properties and allows for a processing of tapes 100 using the full nominal width W. The tapes 100 can be joined flush during the laying process, i.e. without overlays or gaps impairing the final composite structure 102, thus using the full nominal width W even in slit-tapes with thickness of less than 100µm. The polymer matrix composition softenable and tacky during or before placement maintains edge 106a, b precision of slit-tapes and avoids curling or flipping, thus strongly improving placement and composite quality. The fibres 105 are equally distributed within the placed tapes 100 and the composite structure 102 is not prone to crack formation.

Figs. 4a and b depict an embodiment of a composite structure 102 formed by a first and a second tape 100 layer having a tape structure according to a further embodiment of the invention overlayed during placement, e.g. in an AFP method or RTM process. Fig. 4a depicts the tapes 100, in particular slit-tapes, each having a thickness of less than 100µm, before joining, whereas Fig. 4b shows the same tapes 100 after placement but before curing. During placement of tapes 100, the composition of the polymer matrix 104 in the thin ply tapes maintains slit-tape edge quality in the stiffened tapes 100 due to the composition of the softenable polymer matrix 104 of the invention tape structure. The polymer matrix 104 furthermore additionally creates a contact or interdiffusion zone 107 when tapes 100 are overlayed. The contact or interdiffusion zone 107 is formed in the joining region by the softenable polymer matrix 104 and further enhances placement accuracy before curing.

Fig. 5 depicts an embodiment of a composite structure 102 according to an embodiment of the invention. The composite structure 102 can be formed using automated fibre placement (AFP) methods to manufacture the multi-layered composite structure 102. The composite structure 102 comprises at least a first layer 103a, and at least a second layer 103b formed by tapes 100 having a tape structure according to the invention, wherein the second layer 103b is placed on the first layer 103a. The tapes 100 shown in Fig. 5 have a tape width of e.g. ½" (12.7 mm). The placement follows a precision of e.g.±1% and highest quality of the laminate is hence achieved. Tapes of the first and second layer 103a, b adhere to each other before curing the composite structure 102 due to the softenable composition of the polymer matrix 104 used in the tape structures. The composition of the polymer matrix 104 achieves a stiffer tape structure that allows for placement of tapes 100 having less width variations when handled or fed. Gaps 108 between tapes 100, resin rich zones or regions with accumulated fibres 105 in overlayed tapes 100 within the particular layers 103a, b are reduced or prevented due to the enhanced edge quality of the tapes 100. Stiffer yet softenable tapes 100 or tapes 100 softened during placement by heat application e.g. in a laying head of an AFP device can be placed omitting gaps 108 in the placement regions and hence yield higher quality of the composite structure 102 manufactured e. g. in an automated fibre placement (AFP) method. The tape structures allow for automated processing of thin ply slit tapes with thickness of less than 100µm. The polymer matrix 104 composition stiffening the tape structure prevents the tape 100 from curling, u-shaping, and flipping during processing, i. e. during feeding the tape 100 to the region of placement during manufacture. Warping of the tapes 100 in particular when processed and handled over various spools in an automated fibre placement (AFP) device is prevented. The invention tape structure also eliminates width variations and impairment of tape edges 101 occurring due to tension applied during unwinding the slit-tapes from a spool, thus supporting processing of slit-tapes generated from tacky resins. Composite structures 102 of the invention can be configured in particular as tank structures for use with cryogenic stored liquids such as LH2 but also in pipes and pumping systems. The composite structures 102 fulfil highest quality requirements and can be used in aviation applications due to high strength / weight ratio. The tape structure of the invention allows for high quality processing without gaps 108 and overlays and thus withstands cryogenic temperatures. Tapes 100 having a tape structure according to the invention allow for a high degree of automation and are not vulnerable to lay-up errors even when forming slit-tape layers 103a, b that are as thin as possible. This is achieved by the polymeric matrix 104 in the invention tape structure made from e.g. reactive monomers such as BMI, cyanate-esters, epoxies, polyurethanes and cured with anhydrides, amines, isocyanates, imidazoles and having an at least partially temperature-dependent softening layer in a pre-impregnated tow. This provides a matrix that is solid yet flexible at room temperature with no elevated stickiness or tackiness. In particular in the manufacture of tanks, preferably tanks for cryogenic stored liquids such as LH2, the invention tape structures are robust for steering in double curved dome areas. Furthermore, the tape structures allow for enhanced manufacturing speed in thin-ply laminates with less errors, stops and maintenance. The composite structures 102 exhibit enhanced resistance against cryogenic microcracking in composite laminates while maintaining excellent processing properties. The composition of the polymer matrix 104 also reduces internal stress by low curing temperature and slow crosslinking of reactive groups and chain extending effect of the additives.

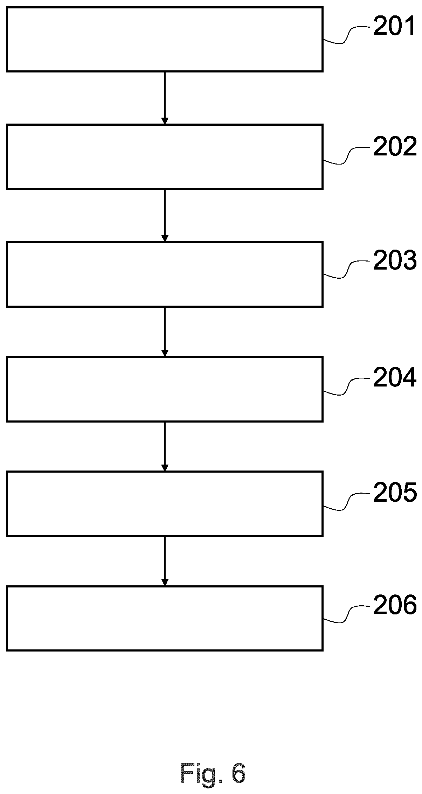

Fig. 6 schematically depicts the steps of an automated fibre placement (AFP) method according to an embodiment of the invention. The automated fibre placement (AFP) method uses a plurality of tapes 100 with a tape structure according to the invention for forming a composite structure 102. In a first step 201 the individual tape 100, each configured as a slit-tape having a thickness of less than 100µm is feed to an automated fibre placement device, in a further step 202 the tape structure is heated to a temperature above room temperature i.e. preferably above a temperature range of between 15°C and 25°, preferably between 18°C and 21° but below the curing temperature of the composite structure 102 in step 203. The heating is applied to soften the tape structure, i. e. increase tackiness. The tape 100 is placed in step 204 on a composite structure 102 or a previous laminated layer 103a, b formed on the composite structure 102 by moving a laying head over the composite structure 102 or the previous laminated layer 103a, b. With the laying head moving over the composite structure 102, in particular in the manufacture of tanks, gaps 108 and overlays of the tapes that would disturb laminate homogeneity are avoided. The composite structure 102, in particular a tank manufactured as described before has a laminate homogeneity without ondulations or gaps 108 which is crucial to reach highest composite performance especially in cryogenic environments such as in storage of LH2.The tape 100 is then compacted in step 205 to establish a permanent connection between the tape 100 and the composite structure 102 or a previous laminated layer 103a, b. The composition of the polymer matrix 104 of the tape structure once softened, forms an interdiffusion zone 107 between overlayed tapes 100 and prevents curling or warping thus eliminating impairment of edge regions and allowing gap-free or gap-reduced placement of the tape. In a further step 206 the composite structure 102 is cured in particular under autoclave conditions at temperatures ranging between 100°C and 180°C, preferably between 110°C and 140°C to form the final structure.

To prevent the composite structure 102 from cracking in cryogenic environments, the tapes 100 used in the method preferably have a thickness of less than 100µm. The method can also be used for manufacturing alternative composite structures 102 such as pipes and pumping.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: tape
- 101: edge
- 102: composite structure
- 103a, b: layer
- 104: polymer matrix
- 105: fibre
- 106a, b: edge region
- 107: interdiffusion zone
- 108: gap
- 201: step
- 202: step
- 203: step
- 204: step
- 205: step
- 206: step
- W: width

## Claims

1. Tape structure of a tape (100) for use in manufacturing a composite structure (102), the tape structure comprising a layer of unidirectional pre-impregnated dry fibres (105) embedded in a thermosetting polymer matrix (104), with the thermosetting polymer matrix (104) having a composition comprising:
- between 20% and 50%, preferably between 25% and 40% by weight of the polymer matrix (104) of at least one first monomer or oligomer,
- between 30% and 60%, preferably between 35% and 40 % by weight of the polymer matrix (104) of at least one second monomer or oligomer,
- between 4% and 25%, preferably between 4% and 7 % by weight of the polymer matrix (104) of at least one curing agent,
- between 0.5% and 5 %, preferably between 0.8% and 1.5% by weight of the polymer matrix (104) of at least one reactive chain extender, and
- at least one additive, preferably configured as a toughening agent,
wherein the polymer matrix (104) is configured to be solid or semi-solid in a first temperature range and softened in a second temperature range different from the first temperature range.

2. Tape structure according to claim 1, wherein the first temperature range is below 15°C to 28°C, preferably below 18°C to 24°C in particular below 18°C to 21°C and the second temperature range is above 15°C to 28°C, preferably above 18°C to 24°C, in particular above 18°C to 21°C.

3. Tape structure according to claim 1 or 2, wherein the polymer matrix (104) further comprises a vitrimeric monomer.

4. Tape structure according to any of claims 1 to 3, further comprising at least one layer consisting of or comprising at least one of a plurality of thermoplastic particles, a fleece or a veil.

5. Tape structure according to any of claims 1 to 4, wherein the tape (100) having the tape structure has a thickness of between 50 µm and 300 µm, preferably less than 100 µm, in particular a thickness of between 40 µm and 75 µm.

6. Tape structure according to any of claims 1 to 5, wherein the at least one first monomer or oligomer has a molecular weight of higher than 400g/mol and/or is preferably selected from the group comprising reactive diglycidyl ether-based epoxy resins, diglycidyl ether bisphenol A resins, epoxy novolac resins or combinations thereof.

7. Tape structure according to any of claims 1 to 6, wherein the at least one second monomer or oligomer has a molecular weight of at least 1000g/mol, preferably between 1200 and 1300 g/mol and/or is preferably selected from the group comprising medium molecular weight epoxy resins and low viscosity epoxy resins or combinations thereof.

8. Tape structure according to any of claims 1 to 7, wherein the at least one curing agent is selected from the group comprising dicyandiamide and diaminodiphenylsulphon.

9. Tape structure according to any of claims 1 to 8, wherein the polymer matrix (104) is configured as a thermosetting polymer matrix (104) curable at a temperature of between 100°C and 180°C, preferably between 110°C and 140°C.

10. Tape structure according to any of claims 1 to 9, wherein a support layer removable from the tape during or after placement of the tape in the automated fibre placement (AFP) processing is provided.

11. Automated fibre placement device (130) having a moveable laying head for tape (100) placement in an automated fibre placement (AFP) method, comprising:
- a feeding device for feeding the tape (100) having a tape structure according to any of claims 1 to 10 to a region of placement,
- a temperature control unit configured to increase the processing temperature of the tape structure, in particular to increase the processing temperature of the tape structure before or during placement above a temperature range of between 15°C and 25°, preferably between 18°C and 21° to soften the tape structure,
- a deposition device for placing and/or compacting the tape structure on a composite structure (102) or a previous laminated layer (103a, b) formed on the composite structure (102),
- a compaction device for establishing a permanent connection between the tape (100) and the composite structure (102) or a previous laminated layer (103a, b) formed on the composite structure (102) with the compaction device being configured to apply at least one of pressure, heat, and electrical current to the tape (100) during or after placement.
wherein the feeding device, the temperature control unit, the deposition device and the compaction device are positioned adjacent to the laying head and configured to move together with the laying head.

12. Automated fibre placement (AFP) method using a tape (100) having a tape structure according to any of claims 1 to 10 for forming a composite structure (102), with the method comprising feeding the tape (100) to an automated fibre placement device according to any of claims 10 to 11, heating the tape (100) to a temperature above room temperature to soften the tape structure before or during placing the tape (100) on a composite structure (102) or a previous laminated layer (103a, b) formed on the composite structure (102) until the tape structure is softened, placing the tape (100) on a composite structure (103) or a previous laminated layer (103a, b) formed on the composite structure (102) by moving a laying head over the composite structure (102) or the previous laminated layer (103a, b), compacting the tape (100) to establish a permanent connection between the tape (100) and the composite structure (102) or a previous laminated layer (103a, b), and curing the composite structure (102).

13. Method according to claim 12, wherein moving the laying head includes moving the laying head over the composite structure (102) or a previous laminated layer (103a, b) in a direction forming an angle with an edge region of the composite structure (102) or a previous laminated layer (103a, b).

14. Method according to any of claims 12 or 13, wherein the composite structure (102) consists of at least a first and second substructure each having a first region and a second region, wherein curing the composite structure (102) comprises independently curing the first or second region of the at least one first substructure and the at least one second substructure, contacting the first or second region of the at least one first substructure with the first or second region of the at least one second substructure , co-curing the first or second region of the at least one first substructure and the first or second region of the at least one second substructure after contacting to form the composite structure (102).

15. Composite structure (102) manufactured in a method according to any of claims 11 to 14, wherein the composite structure (102) is an aircraft part, in particular a tank structure containing a liquid, preferably a cryogenic stored liquid such as liquid hydrogen (LH2).
